Europäisches Patentamt

European Patent Office

Office européen des brevets

(11) Publication number: **0 237 645**
**A2**

## EUROPEAN PATENT APPLICATION

(21) Application number: **86117870.5**

(22) Date of filing: **22.12.86**

(51) Int. Cl.4: **A01C 3/06** , **A01C 15/00**

(30) Priority: **19.02.86 GB 8604050**
**19.02.86 GB 8604051**

(43) Date of publication of application:
**23.09.87 Bulletin 87/39**

(84) Designated Contracting States:
**AT BE CH DE ES FR GR IT LI LU NL SE**

(71) Applicant: **Econ Group Limited**
**Boroughbridge Road**
**Ripon North Yorkshire, HG4 1UE(GB)**

(72) Inventor: **Lupton, William George**
**Lupat Grange Palace Road**
**Ripon HG4 1UW(GB)**

(74) Representative: **Denmark, James**
**5 York Place**
**Leeds LS1 2SD Yorkshire(GB)**

(54) **Improvements relating to spreading machines.**

(57) The present invention provides a spreading machine of a type comprising a hopper with an auger in the base of the hopper. The auger delivers manure to a side opening, and adjacent the side opening is an impeller which receives the material and then by rotating at high speed discharges same in a spreading pattern over the ground to be treated. The invention provides a number of aspects dealing with improved position of the opening, improved design of the auger for ensuring better feed of the manure to the opening by the design of the auger and paddles mounted on the auger, improved impeller construction, improvements relating to deflector plates controlling the deflection of the material as it leaves the impeller, improved means for retaining the manure in the hopper and an improved control device for controlling the passage of manure through the opening to the impeller.

## Improvements relating to spreading machines

This invention relates to spreading machines for the spreading of materials, such as manure, slurry, straw, and other materials which are spread in agriculture, of the type comprising a hopper for receiving the material to be spread, said hopper having side walls which mutually converge in a downwards direction to define at the lower end or gulley in which is located a rotary assembly comprising means defining at least one auger for moving the material axially of the rotary assembly. In one of the side walls is an opening through which the material is discharged in a direction normal to the axis of rotation of the rotary assembly and in the vicinity of the said opening is an impeller which lies with its axis parallel to or substantially parallel to the axis of the rotary assembly. The impeller is driven at high speed compared to the speed at which the rotary assembly is rotated, so as in fact to grab and fling the material away from the machine in a direction normal to the axis of the rotary assembly.

The machine is for moving over the ground to be treated in a direction which is the direction in which the rotary assembly axis lies, and therefore as the machine is used, the material is thrown laterally of the directrion in which the machine moves.

Such machines will be referred to hereinafter and in the appended claims as "spreading machines of the type set forth". Also, in the interests of simplicity of description reference will be made hereinafter only to the spreading of the various forms of agricultural manures which are spread by the machines, but it is to be borne in mind that the machines can spread other materials.

The known spreading machines of the type set forth have only recently (within the last 5 or 6 years) been introduced into the United Kingdom market, and, like all new types of machines, have a number of technical shortcomings. The present invention in its various aspects seeks to improve various technical drawbacks which have been identified in the existing known spreading machines of the type set forth. Any of the various aspects of the invention in itself can be introduced in spreading machines of the type set forth for the improvement of same or any two or more of the aspects of the invention can be embodied in combination in the spreading machines.

Whilst the conventional spreaders of the type set forth work satisfactorily with the majority of manures, when the spreader is charged with what is known as "box muck" which comprises fresh animal manure mixed with straw, which is the muck removed from cow sheds and horse boxes, the muck tends to bridge across the auger and the muck "barrels" in the auger with the result that there is no delivery of muck to the opening, and the spreader simply ceases to function. In such circumstances, it is necessary for a workman to enter the hopper and, using a pitch fork, to remove the muck from the spreader manually.

Clearly, this is a serious disadvantage, because in the final analysis the box muck could have been applied manually directly from the cow shed or horse box and the introduction of same into a spreader results in a loss of time and efficiency.

In accordance with a first aspect of the present invention, a spreading machine of the type set forth is provided wherein the rotary assembly has two opposite handed auger sections extending from the respective ends of the assembly leading to the discharge opening wherein said discharge opening is of a size permitting effective discharge of box muck, and is located in relation to the overall size of the hopper such that the points on the edges of the opening which lie, when viewed horizontally, on the distributor axis are geometrically related to the positions of the top corners of the ends of the hopper such that said top ends lie within angular planes which when the opening is viewed from the side lie at 25° and 75° to the horizontal and pass through said points at the edges of said opening.

The opening may be capable of variation in size by virtue of there being a door which can be positioned completely to uncover the opening or to cover same to a varying degree. The door may be in two or three sections which cover different parts of the opening and which are individually movable by suitable means such as hydraulic rams. In another arrangement, there may be a single large door covering the opening, and within the large door, a small door which is independently openable.

Also, there may be an opening and door arrangement as described at each side of the hopper, the doors being selectively openable and closeable at will.

In another construction, instead of a sliding door, the or each opening may be provided with one or more pivotally mounted doors.

Because of the positioning of wheels, for the support of the hopper and its contents, it will normally not be possible to place the door aperature in the centre length of the hopper, which is the most desirable position, but the door should be positioned as close to this location as possible.

In a second aspect, the present invention seeks to provide a rotary assembly design whereby the difficulty of moving box muck effectively will be further overcome, and in accordance with this aspect of the invention, a rotary assembly for a spreading machine of the type set forth comprises an auger shaft carrying flights, wherein the auger shaft is of reducing diameter from one end towards the other, the flight means preferably being of constant diameter.

By this means, it is ensured that any muck between flight sections will always experience a thrust in the longitudinal direction of the auger, whereby the problem of barrelling of box muck is avoided.

The auger shaft may comprise a fabricated shaft of hexagonal cross-section with the flight means being defined by individual and discrete flight blades mounted on the faces of the auger shaft. As an alternative to a hexagonal section, the auger shaft may be square sectioned or circular sectioned. The reduction in shaft diameter from one end to the other may be achieved by continuously reducing the cross-section from one to the other, or it may be achieved by means of stepping the shaft at spaced locations therealong.

Such a rotary assembly may be used in a spreading machine of the type set forth wherein the discharge opening is at one end of the hopper, and therefore the auger feeds the manure to that end only, but in an alternative arrangement which is especially useable with the first aspect of the invention there may be two auger sections which respectively feed the manure to the discharge opening in the hopper intermediate the ends thereof. In each case, preferably the tapering or reduction in cross-section of the auger shaft or the shaft of each of the sections is towards the discharge opening. That is to say, in the case of a single auger leading to a discharge opening at one end of the hopper, the smaller shaft end of the auger is adjacent the discharge opening, whilst in the case of two auger sections leading to a discharge opening intermediate the ends of the hopper, the smaller ends of the said sections are located adjacent the discharge opening.

In the conventional spreading machines of the type set forth the section of the rotary assembly opposite the opening is provided with a series of paddles which in use push the material at right angles to the rotary assembly and out of the opening, such paddles being in the form of spring steel blades with rubber or the like wipers on the ends thereof. These paddles yield when they meet an obstruction and whilst they work satisfactorily when fluent manure such as a slurry is being spread, when the machine handles box muck, because it is so thick and dense, the muck tends to build up on the inner surface of the gulley, and the spring paddles simply deflect and ride over the build up of the muck whereby efficiency of spreading is reduced. Also, because of the deflection of the paddles, the frictional force between the paddles and the muck increases leading to a demand for increased power output. The spring paddles furthermore act so as to propel the material in one direction only ie. at right angles to the axis of the rotary assembly, and this is not always most desirable especially when the manure contains stones, as these stones may be propelled dangerously from the machine.

In a third aspect of the invention, the rotary assembly is provided with paddles adjacent the opening, said paddles comprising rigid arms extending outwardly from the axis of the rotary assembly and having shoe plates at their outer ends, said shoe plates being inclined relative to the axial planes and the radical planes of the arms so that each shoe plate in the operation of the machine, acts on the material so as to on the one hand move the material towards the opening and on the other hand to move the material axially of the rotary assembly.

At least two of the arms and their plates are arranged to operate in conjunction with each other so that the displacement of the material by one arm axially of the rotary assembly is towards the radial plane in which the other arm travels and vice versa so that the two arms operate to move the material back and forth.

This back and forth movement of the material has been found to separate out stones from the manure in that the stones tend to be moved back and forth in the gulley whilst the manure is moved out of the opening to the impeller. Therefore, it is preferable that there are several pairs of arms with their shoe plates arranged to co-operate with each other.

The arms may be arranged in axially spaced radial planes, and may define one or more spiral series.

The arms are preferably of hollow, square sectioned steel bar welded to a core shaft of the rotary assembly.

The present invention also provides in a forth aspect, a new design of impeller. The impeller used in the conventional spreading machine of the type set forth comprises a plurality of similar open box structures defined by side plates between which are partition plates whereby each structure has a plurality of cavities. The partition plates extend from a central location which lies on the axis of rotation of the impeller and the outer edges of the partition plates which extend to the edges of the side plates, have serrations for biting into the manure which is discharged through the opening and for propelling that manure over the ground to be treated.

The respective box structures are welded side by side, but angularly offset so that the teeth and partitions of respective structures are offset.

The conventional impeller is difficult and expensive to construct, and furthermore the manure tends to collect in the base of each cavity.

The present invention provides in the forth aspect an impeller which does not suffer from these disadvantages and in the forth aspect of the invention a spreading machine of the type set forth has an impeller comprising an impeller shaft on which are mounted in axially spaced arrangement supporting discs, and extending between adjacent ones of said discs are manure engaging bar means, the bar means between one pair of adjacent discs being angularly offset in relation to the bar means of the adjacent pair of discs.

Each disc may have a profiled periphery to receive by welding the ends of angle iron bars forming part of said bar means, the angle iron bars having mounted thereon removable wear plates having serrated edges for engaging the manure.

By so constructing the impeller, a relatively open cage construction can be provided in that the bar means extend only between the peripheries of adjacent discs, and therefore cleaning of the impeller can be affected much easier than in the conventional spreading machine.

In the conventional spreading machine of the type set forth, in which the impeller operates in an overshot mode which means that the impeller propels the manure from the top side thereof, there is a deflector plate located above the opening in order to deflect the manure being propelled by the impeller more or less horizontally from the machine. This deflector is simply a plate welded to a door which is movable on the side of the hopper and serves to close the opening when for example the machine is not in use and is in transit. The door can in fact be positioned to close the opening to any required degree depending upon the manure and consistency of the manure. Generally speaking, the more fluent the manure, the greater the extent to which the door closes the opening. When box muck is being spread, the door is positioned so that it does not cover any or the minimum amount of the opening.

The deflector plate is set at a fixed angle in relation to the door and therefore at a fixed angle in relation to the impeller and opening, and this is not satisfactory for all types of manure, and furthermore, when the door is fully retracted, the deflector makes no contribution whatsoever to the control of the flight of the manure.

A fifth aspect of the invention provides that a spreading machine of the type set forth is arranged to operate on an overshot mode, and above the impeller is a deflector means for directing the flight of manure from the impeller, said deflection means comprising a canopy structure which extends outwardly from the side of the hopper and is adjustable in angular position in relation to the hopper.

By such means the angle of the deflector can be adjusted depending upon the type of manure being spread. For thinner manures i.e. slurries the deflector can be arranged so as to be substantially horizontal above the impeller, whilst for thicker manures (more solids content) the deflector can be angled more upwardly to give the thrown manure a greater trajector angle as it leaves the impeller.

The deflector may comprise a number of similar canopy sections mounted at their inner ends on a shaft on which they can be turned for adjusting their angular positions, and then reclamped to the shaft. The shaft as a whole can be pivoted by means of a hand lever.

The hand lever preferably has a locking pin which can be engatged in any one of a series of holes in a locking quadrant.

The shaft and quadrant are preferably secured to a door provided for the closing partially or fully the said opening.

Thus in the setting of the deflector, the individual canopy sections along the length of the impeller may be set to different angles relative to each other, then clamped to the shaft, and then the whole deflector assembly may be pivoted by pivoting the shaft using the hand lever; the lever and thus the deflector canopy sections may be locked in any of a plurality of portions dictated by the holes in the quadrant.

This aspect of the invention provides an effective and adjustable deflector structure for the effective distribution of the manure being propelled from te impeller.

The auger of the rotary assembly of the conventional spreading machine of the type set forth further has difficulty in moving box muck in that as described herein the manure barrels between the turns or blades of the flight or flights, and no effective axial movement of the manure takes place, and therefore the auger fails to perform its function. One method of improving the auger is to construct it according to the first aspect of this invention. Other attempts to overcome this problem have been made, and one of these attempts comprises the varying of the pitch between turns of the helical flight means so that in a direction from one end of the elongated member to the other, the pitch between turns of the flight means progressively varies i.e. increases or decreases. This measure has found some success, but is still does not appear to provide a complete solution to the displacement of semi-solid material such as box muck.

A sixth aspect of the present invention concerns the provision in spreading machines of the type set forth of an auger of the type of which the flight means is made up of a number of blades, arranged in a helical path or in helical paths to define one or several flight means, and in accordance with the present invention, the blades are mounted so as to have different inclinations in relation to the axis of the auger, and specifically, in a direction from end to end of the auger, the blade angles in relation to the auger axis progressively increase or decrease.

By so mounting the blades, and if it is assumed that from a first end of the auger towards the other end the blade angle progressively descreases in relation to the auger axis i.e. becomes more inclined towards a position lying on the auger axis, so such blades will progressively sweep a greater volume around the auger axis when the auger is rotated. Thus, if one imagines a portion of the material to be displaced being engaged by the first blade at said one end, it will be thrust axially by the blade so as to be engaged either during the same or the next revolution of the auger, by the next blade of the series, but the next blade will be set at less of an angle to the auger axis, which means that it will sweep a greater volume, and will in fact give added acceleration to the material in its movement along the direction of the auger axis. A similar effect takes place as the material moves from engagement with the second blade to engagement with the third blade, and so on so that in fact from the said one end, the auger blades are creating spaces or voids into which surrounding material falls or is urged, achieving particularly effective feeding of the material.

In a specific embodiment, the auger is provided with two separate flight means extending from the opposite ends of the auger, and being of opposite hand, so that if the auger is rotated in a body of material to be moved, then material will be moved from opposite ends of the auger towards the centre region.

This aspect of the invention although combinable with any other aspect or aspects of the present invention, is especially suited to combination with the second aspect of the invention, as these two aspects combine to give a highly effective auger for moving box muck. In a full rotary assembly, paddles are provided between the auger sections. Such paddles preferably are according to the third aspect of the invention.

If the auger shaft is of constant cross section, then the auger blades will be of identical construction, but if, as is preferred for large distribution machines handling large quantities of box muck manure, the auger shaft is of converging form according to the secon d aspect of the invention from the ends towards the region carrying the paddles, then the auger blades will be arranged to be progressively increasing in height in order to take account of the tapering, and in order to ensure that the tips of the auger blades travel in a common cylinder of revolution.

Another problem which has been identified with spreading machines of the type set forth is that the box muck tends with rotation of the rotary assembly, to lift out of the hopper at the rising side of the rotary assembly, and has been known to spill over the hopper edge because of this lifting of the box muck.

The present invention, by a simple means, overcomes this difficulty and in accordance with the invention in a seventh aspect, the inside of the hopper at the rising side of the rotary assembly is provided with retaining means preventing lifting of the box muck up that side of the hopper.

Such retaining means may comprise tines disposed horizontally or above or below the horizontal, and preferably are disposed lengthwise of the hopper at the same location as the opening, and on the same side of the hopper. The tines may be fixed or hinged as required in which latter case they hang down when the hopper is empty, for loading, and will be pushed to a substantially horizontal position by the uprising material when the machine is in use, restraining the material from being pushed over the top edge of the side of the hopper.

On the known spreading machines of the type set forth, the size of the pieces of box muck or other solid manure discharged by the impeller depends upon the extent to which the door covers the opening and impeller speed and in practice only a relatively coarse control of the size of pieces of manure discharged is achieved.

According to an eighth aspect of the invention means is provided for maintaining a better control over the size of pieces of manure discharged from the impeller, and this eighth aspect provides that in a spreading machine of the type set forth, a door for closing the opening is provided, said door being fastenable to close the opening to a greater or lesser extent, and in addition there is a shredder plate mounted on but movable relative to the door, said shredder plate having a shredder edge which overhangs an edge of the door which overlaps the opening above the impeller, said shredder plate being adjustable on the door so as to vary accurately the spacing between the impeller and the shredder edge so as to control the degree of shredding of the material which issues from the impeller.

The shredder plate may be displaceable away from te impeller against spring loading when a stone or other obstruction strikes same. The moving away may be a pivotal movement or a sliding movement.

The door may be provided with a stop so that when the door is moved (raised) upwardly to retract the door and increase the opening size, the shredder plate strikes the stop and then is lifted clear of the impeller with the door.

The shredder plate may be adjustably mounted on the door so that its position can be adjusted accurately to vary the gap between the impeller and the shredder plate. The adjustment means may comprise a rotary cam, the shredder plate having a follower which engages the cam, the follower plate being spring loaded onto the cam. As the cam is rotated so the spring loading either moves the spreader plate nearer the impeller, or the cam moves it further away from the impeller.

Embodiments of the various aspect of the present invention will now be described, by way of example, with reference to te accompanying drawings; wherein:-

Figure 1 is a diagrammatic perspective view of a spreading machine of the type set forth;

Figure 2 is a side view of a spreading machine according to the invention;

Figure 3 is a plan of the spreading machine shown in figure 2;

Figure 4 is a sectional view of the hopper of the machine of Figures 2 and 3, the section being on line X-X in Figure 3;

Figure 5 is a view similar to Figure 4, except that the section is taken on the line Y-Y of Figure 3;

Figure 6 is a side view of an alternative form of auger according to the invention;

Figure 7 is an enlarged sectional side view of the ringed detail in Figure 4;

Figure 8 is a front view of the detail shown in Figure 7;

Figures 9, 10 and 11 are respectively a perspective view, a side view and a front view of a paddle of the auger shown in figures 3 and 6;

Figure 12 is a side view of an auger according to another embodiment of the invention;

Figure 13 is an end view of the auger of Figure 12 when viewed in the direction of arrow A in Figure 12;

Figure 14 is an end view of one of two similarly formed plates used for the fabrication of the core shaft of the auger of Figure 12;

Figure 14A is a developed diagram showing the spacing and angles of the flight blades of the auger shown in Figure 12;

Figures 15 and 16 are a side view and end view of an impeller according to the invention;

Figure 17 is a side view of one of the intermediate discs of the impeller of Figures 15 and 16;

Figure 18 is a side view of one of the end discs of the impeller of Figures 15 and 16;

Figure 19 is an end view of the power transmission used in spreading machines according to the invention;

Figure 20 is a sectional view of a shredder plate arrangement according to the invention; and

Figure 21 is a view of the arrangement of Figure 20, but showing the adjustment means.

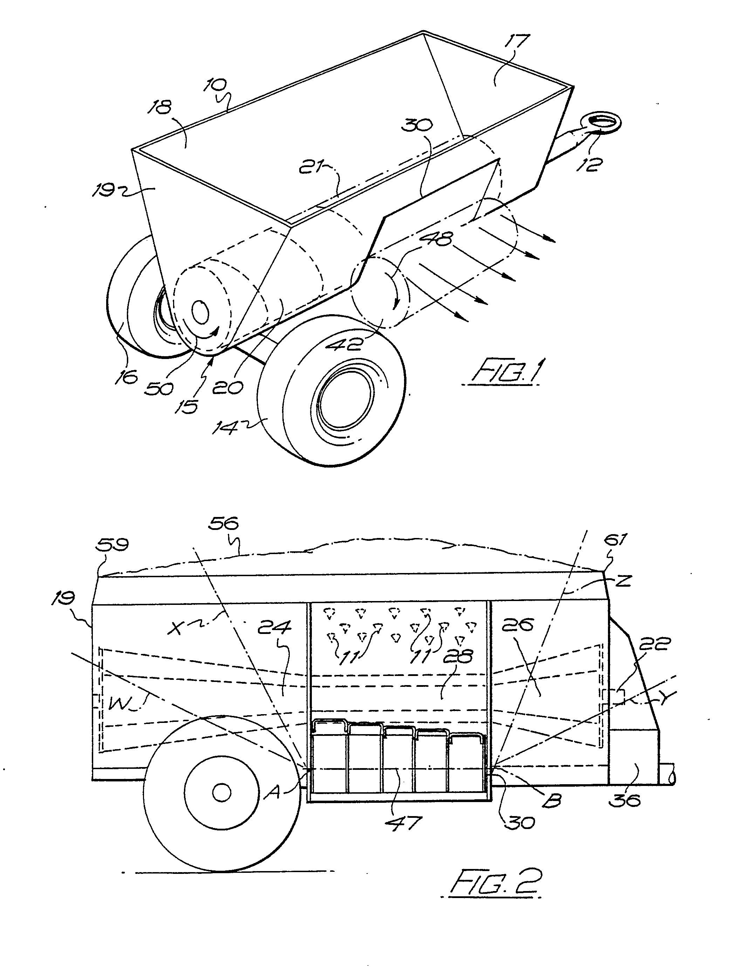

Referring firstly to Figure 1, the apparatus according to the embodiment is in the form of a trailer having an elongated body 10 at the front end of which is a trailing hitch 12, and towards the rear end the vehicle is supported on ground engaging wheels 14, 16.

The trailer is open topped, and has a V-shaped cross-section as shown defined by two mutually inclined walls 18 and 20 leading to a gulley 15, and two end walls 17, 19.

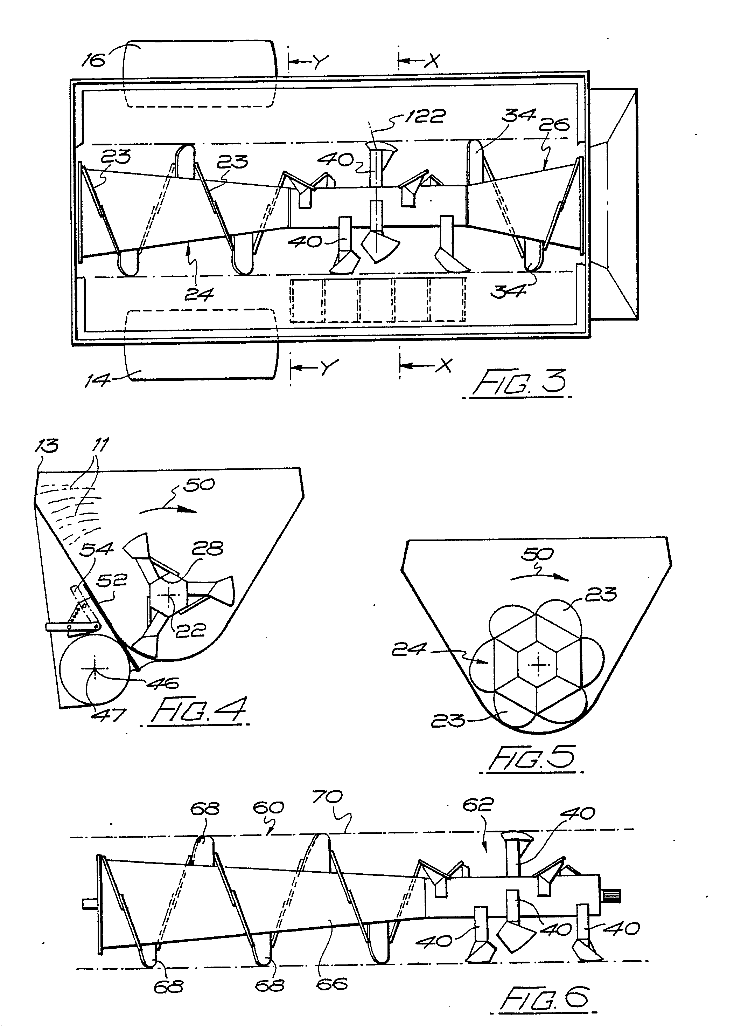

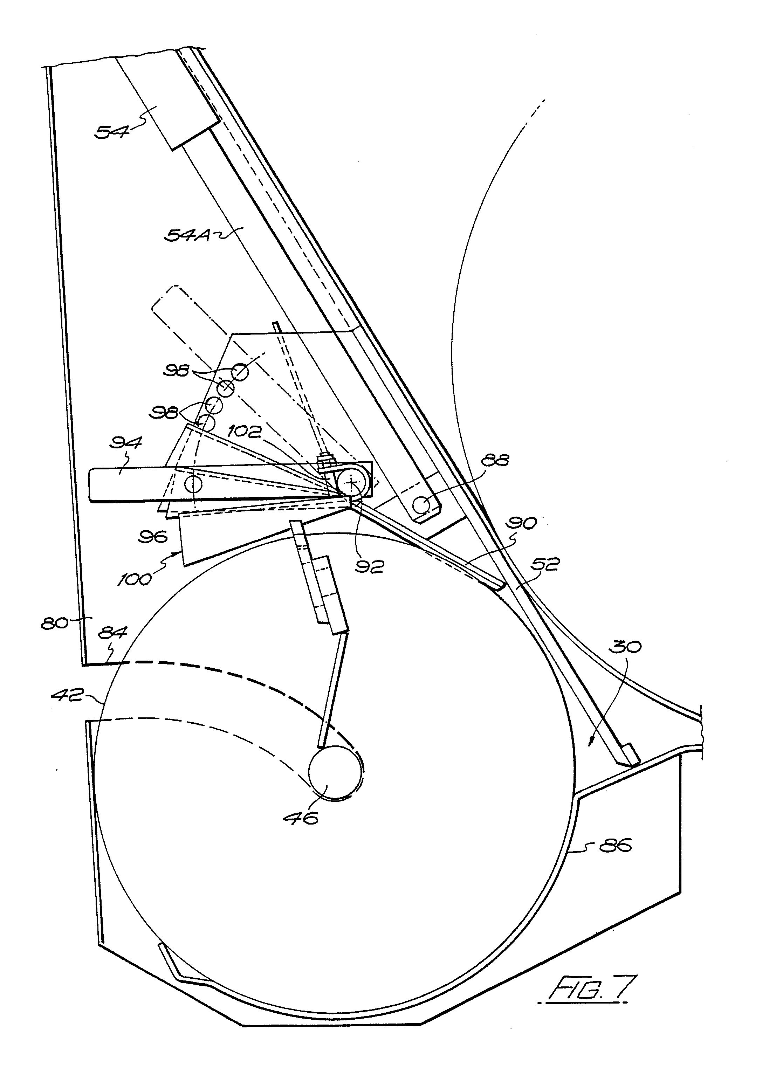

In the gulley of the trailer is a rotary assembly 21 comprising as shown in Figures 2 and 3 an auger shaft 22 having a first auger section 24, a second auger section 26, and a central beater section 28. Auger section 24 extends from the rear end 19 of the vehicle to a position adjacent an edge of an opening or door 30 in side 20 of the hopper, and is provided with conveying flights 23 which are disposed on a helical path of a first hand. The flights may be individual and spaced flights, or continuous flights with various shapes and or steps may be used to define the active portion of the auger. In fact, it appears that a flight with a rough edge lik a saw reduces horse power requirement and may therefore be desireable.

Auger section 26 is constructed similarly, its flights being indicated by reference 34, but the helix of auger section 26 is of opposite hand, so that by rotation of the auger shaft 22, material placed in the hopper 10 will be moved from the ends of the vehicle towards the door 30. The drive means for the shaft 32 is contained in the casing 36 which may contain a gear box and a power take-off shaft coupling and will be described in more detail when referring to Figure 19.

Each of the sections 24 and 26 has a base or core shaft portion on which the flights are mounted, and the base portion is of tapering configuration as shown clearly in Figure 1, the shaft portion descreasing in dimension from the adjacent end of the hopper body towards the central section 28. In the example illustrated, the shaft section of each auger section 24, 26 is of hexagonal form.

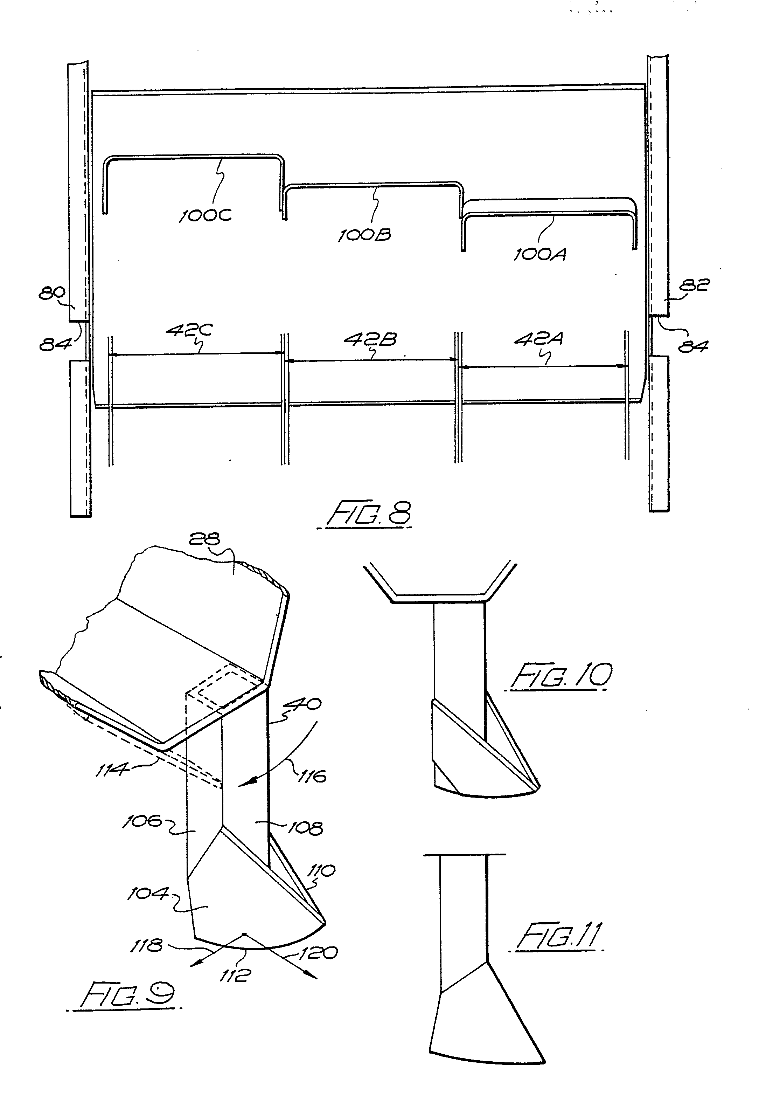

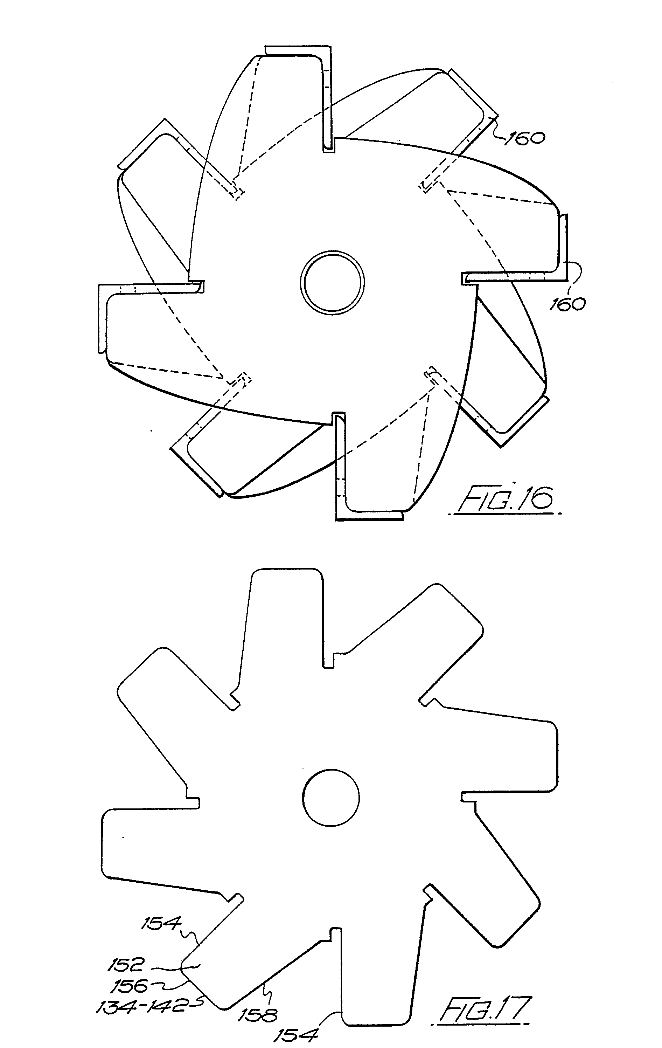

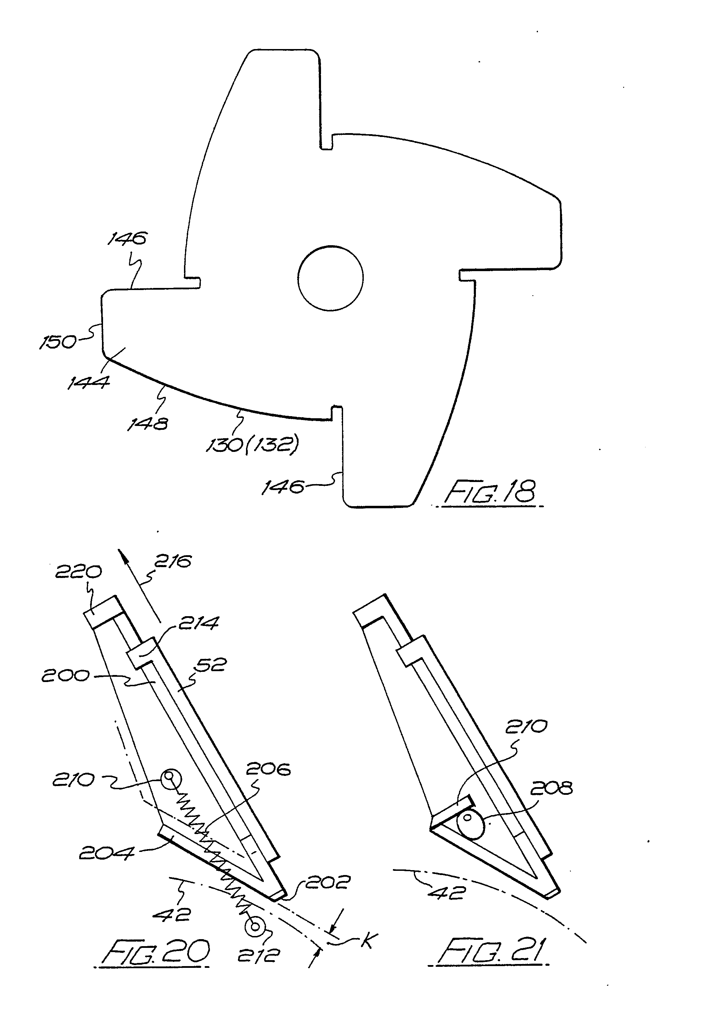

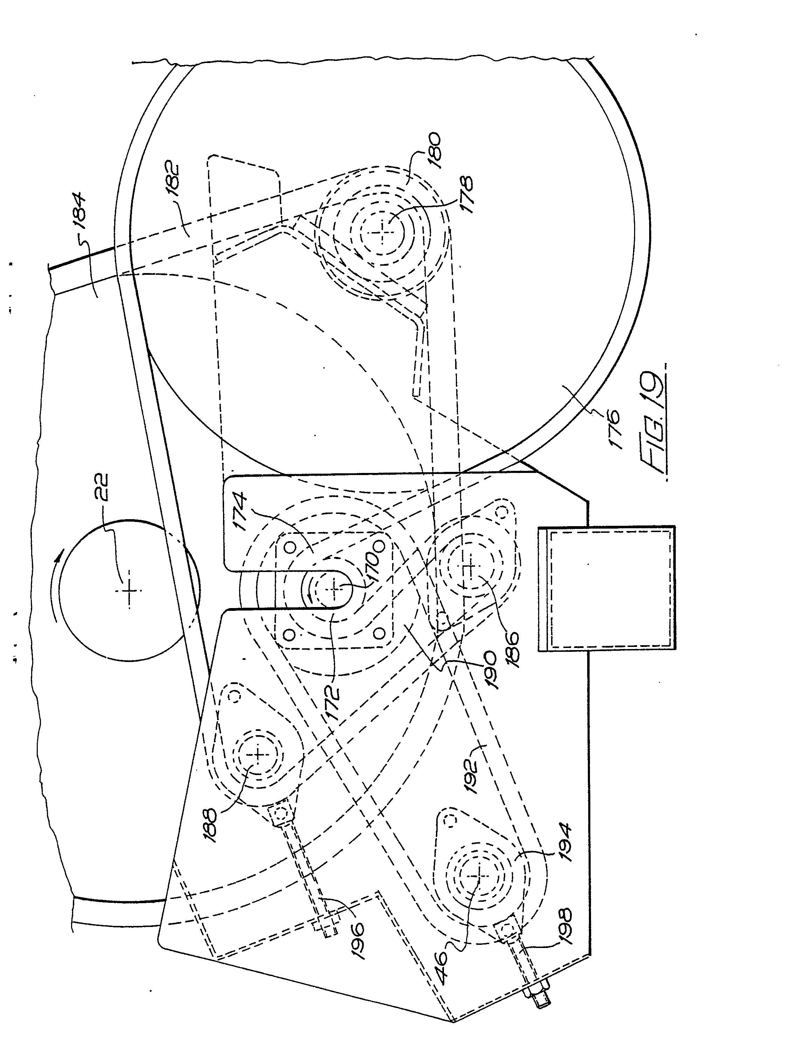

The centre section 28 comprises a hexagonal shaft portion 28 as shown in Figure 4, and this portion carries beater paddles 40 which beat the material fed by the auger sections into the path of the paddles, and this beating in turn forces the material through the door 30 in a manner to be more fully described in relation to Figures 9, 10 and 11. The material is engaged by a high speed distributor 42 (see Figure 2) made up of a number of angularly spaced bars which are arranged on a distributor shaft 46, such shaft being rotatable about a horizontal axis 47 which is parallel to the axis of the shaft 22 as shown in Figure 4. The distributor 42 is, through suitable gearing in the casing 36, driven at a speed many times the speed of the auger, and it may be rotated in the direction as shown by arrows 48 in Figure 1 when the machine operates in the overshot mode, or in the opposite direction when the machine operates in the undershot mode. The direction of rotation of the auger is indicated by arrow 50 in Figure 1.

The opening 30 is associated with a sliding door 52 (which may be in two or three sections) which can be displaced by a suitable power means such as a hydraulic ram (or rams) or the like as indicated by arrow 54 in Figure 4 in order to vary the size of the opening 30 depending upon the type of material which is being spread by the trailer.

The opening 30 is designed so as to be capable of discharging the nox muck referred to herein, and furthermore the door opening 30 is specifically located so that, as shown in Figure 2, the material 56 in the trailer, by virtue of its repose angle, will tend to repose and gravitate towards the opening 30 and directly out of same, facilitating discharge from the hopper, which distinguishes the apparatus according to the invention in relation to the known apparatus of this type which traditionally places the door opening 30 at the front end of the hopper body.

The location of the door in relation to the hopper size is important to the first aspect of te present invention and the limiting parameters can be understood by referring to Figure 2. If one considers planes W and X, and Y and Z, extending at angles 25° and 75° to the horizontal from the points A and B, being the points, when viewed in side view, on the respective edges of the opening 30 which lie in the axis 47 of the distributor, then the top corners 59 and 61 of the hopper should lie between the planes W and X, and Y and Z as shown.

With this arrangement the majority of the material 56 contained in the hopper is therefore reposing towards the opening 30, thereby lightening the load on the auger, and preventing barreling of the material with the auger. the barreling comprises a situation when the material simply traps between the flights of the auger and is turned with the auger but does not make any axial progression of the auger.

Figures 2 and 4 also illustrate an embodiment of the seventh aspect of the invention namely the provision of a means in the form of tines 11 for restraining uprising manure in the hopper due to the uprising of the paddles 40, from passing over the edge 13 of the hopper. The tines may be fixed or hinged individually or as an assembly so that they hang down when the hopper is empty for loading, and are pushed upwards into their working position by the uprising material during operation of the machine to prevent material from being pushed over the edge 13.

The technical advance of the apparatus according to the first aspect of the invention comprises the provision of an adequate door for the discharge of box muck, and the angular range of the planes W:X and Y:Z has been found to be the best range for materials of the type in question, coupled with the use of an auger having sections of opposite hand to feed the material from both ends of the hoppers to the door, providing an efficient apparatus in which the discharge of the box muck is performed effectively. This distinguishes from other apparatus of this type in which the door has been located towards the end of the hopper body and the auger comprises essentially a single length of auger flight of a single hand.

With the first aspect of the invention any type of rotary assembly can be used although the provision of augers with tapered cores is particularly suitable.

The second aspect of the present invention provides, as shown in Figures 2, 3, and 6 that the auger shaft over the respective sections 24 and 26 is of tapering form, tapering from the larger dimension at the end remote from section 28 to the narrower end where it is connected to the section 28, and in order to compensate for this reduction in shaft diameter, the flights 23 and 34 are made of increasing height from the larger end to the smaller end of the shaft section 24 and 26 as the case may be, in order that the tops of the flights will sweep through the same cylindrical plane. This reducing of the shaft diameter also provides an additional means of ensuring that the muck will continue to be fed by the auger sections to the section 28 even although the muck may be the box muck referred to herein.

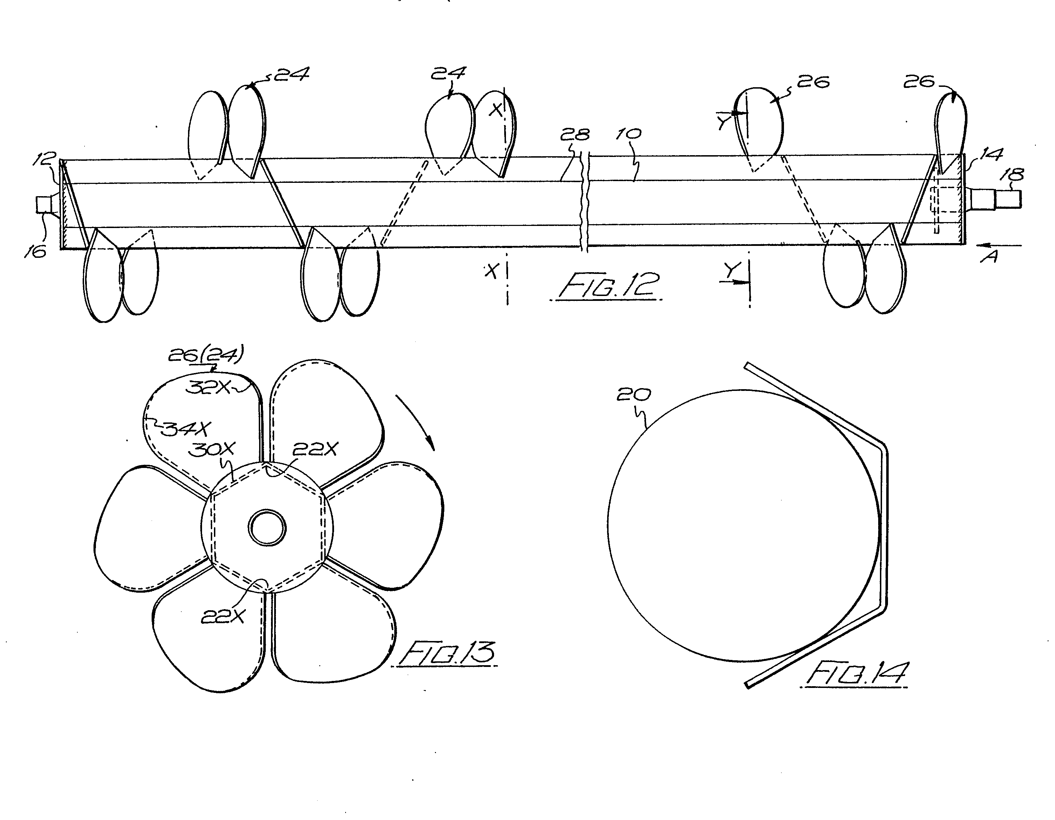

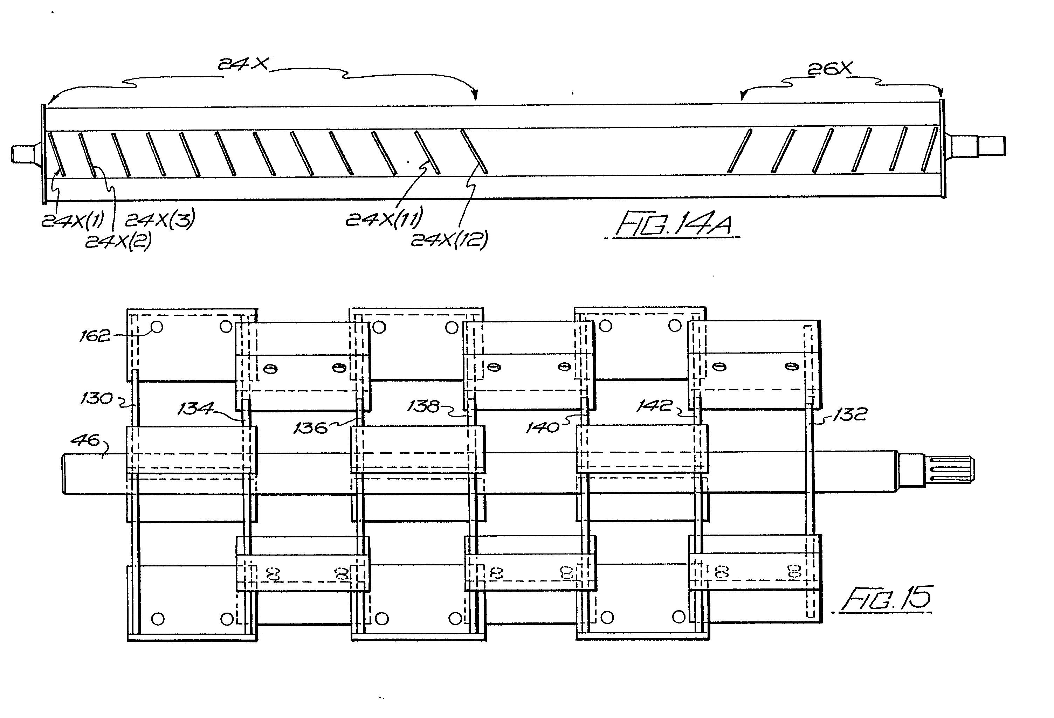

In the embodiment of the invention shown in Figure 6, the auger layout is for use with a conventional spreading machine of the type set forth in that there is a main section 60 and a section 62 with the paddles 40. The main section 60 is however in accordance with the second aspect of the invention in that the shaft 66 is of tapering cross-section as shown with flights 68 of progressively increasing height from the larger shaft end to the smaller shaft end so that the tips will travel in the same cylindrical plane 70. The section 62 has a group of paddles 40 which are similar in construction and layout to paddles 40 of the Figure 3 arrangement. the auger shown in figure 6 however is for use in connection with a hopper which has the discharge outlet 30 at one end, which is the conventional method.

Referring now to Figures 7 and 8, the impeller 42 as shown in Figure 7 is mounted on a pair of mounting plates 80, 82 having slots 84 for receiving the spindle 46 of the impeller. Figure 7 also shows how the floor of the hopper extends outwardly so as to form an undershield 86 for the impeller 42. The opening 30 is also shown in Figure 7, as is the door 52, the door being shown in the closed position. The ram 54 with piston rod 4A are shown, and the point of coupling of the ram piston 54A to the door 52 is indicated by numeral 88. Attached to the door is a guide plate 90 which lies substantially tangentially to the impeller when the door 52 is in the closed position shown in Figure 7.

In the region of the outer end of the guide plate 90, the door carries a pivot shaft 92 having past therewith a handle 94. The handle 94 has a locking pin 96 for engagement in any of a plurality of holes 96 lying on a pitch circle about the axis of pin 92 whereby the shaft 92 can be pivoted to any of a plurality of positions corresponding to the locking holes 98, by manipulation of the handle 94, and when the handle 94 is in any selected position, the locking pin 96 is engaged in the appropriate holes 98 locking the handle 94 sharpening to in such a position.

There is a plurality of deflector plates 100, and in Figures 7 and 8 only three 100A, 100B and 100C are shown, and each of these is mounted on the shaft 92 and can be clamped thereto via a bolt a nut arrangement 102 as shown in Figure 7. Each deflector plate 100 is in the form of a canopy of inverted U-section shown clearly in Figure 8, and each section 100A, 100B and so on is in register with a section of the impeller, and such section being indicated diagrammatically in Figure 8 by reference numerals 42A, 42B, 42C. The deflector plates 100A to 100C are positioned on the shaft 92 in the required angular disposition. From right to left in Figure 8 the deflector plates are shown at progressively greater angularity. When the deflector plates 100A and 100C are positioned as required and are locked in position by means of the clamps 102, then the whole assembly of the deflector plates, which forms a canopy structure over the impeller 42, can be adjusted angularly by manipulation of the handle 94 as described. The angular position of the deflector plate structure dictates the angle at which the manure will fly from the impeller when the spreading machine is in use. In use, the door 52 will be upwardly retracted from the position shown in Figure 7, but only by a relatively small amount for most manures, and then the manure will travel from the hopper through the opening 30, then upwardly due to the driving action of the impeller to the underside of the guide plate 90 and to the underside of the deflector plates 100A to 100C.

The deflector plate arrangement is one embodiment of the fifth aspect of the invention as disclosed herein.

Referring now to Figures 9, 10 and 11, an embodiment of the third aspect of this invention, namely the paddle construction is shown. As can be seen from Figures 9, 10 and 11, the paddle 40 is made up of hollow square sectioned bar and the bar extends substantially radially from the core section 28 which is of hexagonal sectional form. At its outer extremity, the arm 40 has a shoe plate 104 which is welded to the front 106 and one side 108 of the arm 40, such front and side being cut at the appropriate angle to ensure that the shoe plate 104 which is flat is angled relative to the front face 106 and to the side face 108. A reinforcing plate 110 is also welded to the curved extremity 112 with the shoe plate and to the arm 40. A strap 114 welded between the core section 28 and the front 106 of the arm serves to rigidify the assembly. By virtue of angling the shoe plate 104 and covering the lower edge as shown, when the auger is rotated as indicated by arrow 116, the material in the gulley is engaged by the front face of the shoe plate 104 over a narrow strip at the vicinity of the lower edge, and the material experiences force which can be broken into two components represented by the arrows 118 and 120, which components respectively urge the material on the one hand in the radical direction 116 indicated by arrow 118, and on the other hand axially in the gulley as indicated by arrow 120. The axial component force pushes in fact stones and other relatively heavy materials along the gulley, and axially displaced on the auger is another paddle similar to the paddle as shown in Figure 9, but with the shoe plate arranged to be of opposite hand, so that the axial thrust from that shoe plate is back towards shoe plate 104, and in fact the pair of paddles act to move stones and other relatively heavy material back and forth in the trough whilst the manure tends to be forced out of the opening by virtue of the component of the force indicated by numeral 118.

In fact, referring to Figures 3 and 6, there are a plurality of paddles as shown in Figures 9, 10 and 11 to ensure the said back and forth movement of the stones and some of the material takes place in the gulley. There are three paddles in a central plane 122 and there may be two or three paddles disposed on opposite sides of this plane. The paddles to the left hand side have their shoe plates arranged to push the material back towards the plane 122, and the paddle to the right hand side also have their shoe plates arranged to push the material towards the plane 122. The paddles may be angularly offset as desired.

This back and forth agitation of the material and stones therein ensures that the stones can be displaced without jamming the auger.

Referring now to Figures 12, 13, 14 and 14A, the auger shown comprises an elongated shaft body 10X of the hexagonal form shown clearly in Figure 13, and via mounting plates 12X and 14X at the ends of the auger are carried stub shafts 16X and 18X by which the auger is mounted for rotation and by which it is driven by suitable means.

Figure 14 shows how the auger shaft body 10X is formed by bending metal plates into half hexagonal form so that the flats lie tangentially to a base circle 20X. the two body halves are welded together in the regions 22X as shown in Figure 13.

The body carries on the flats of the hexagonal shape auger flight blades 24X forming a first series of blades, and 26X forming a second series of blades. the first series of blades is arranged in helical flight arrangement from the left hand end of the body shown in Figure 12, while the blades 26X extend from the right hand end of the auger body, the respective flights terminating at sections X-X and Y-Y. The series of flights 24X and 26X respectively are arranged in opposite hands so that as the auger is turned in use, and the flight blades engage material surrounding the auger, that material is forced longitudinally of the auger by the respective flights towards central region 28X of the body lying between the sections X-X and Y-Y. The section 28X in use will carry a plurality of paddles such as are shown in Figures 2, 3, 6, 9, 10 and 11.

Of each series of blades, each blade is stamped from flat sheet metal and comprises the same profile as shown in Figure 13 having a straight base 30X and a lobed contour defining a leading edge nose 32X and a smoother curved trailing edge 34X.

Of each series of blades 24X and 26X, the adjacent blades are angularly pitched relative to the body 10 by 60°, so that the adjacent blades are mounted with their straight edges 30X on adjacent flats of the body 10X. Thus, six blades complete one turn of the helical path. In the series 24X there are in fact twelve blades and therefore the helix has two turns, whilst in the series 26X there are only six blades completing one turn.

Figure 14A shows the two series of blades 24X and 26X, but these are shown mounted on one flat only of the body, in order to illustrate the axial pitching of the blades, and also the respective inclinations of same, because if reference is made to Figure 14A, the pitching of the size and angular dispositions of the blades in each series is shown and considering the series 24X, it will be seen that the pitching of the blades along the axis of the body progressively increases. Thus the pitching between blade 24X(1) and 24X(2) is 104mm, whilst that between 24X(2) and 24X(3) is 109mm and so on until the pitching between blade 24X(11) and 24X(12) is 155.5mm.

In addition, the angular disposition of the blades in the series 24X, as one progresses from left to right along the series, increases in relation to the normal to the body axis. thus, blade 24X(1) lies at a pitch angle of 18°, whereas blade 24X(2) lies at an angle of 19°, and through the series of blades 24X the angle increases until the angle of blade 24X(12) is 29°.

Similarly, the blades of the series 26X are of increasing pitch towards the centre section XY of the auger and the pitching and angles ae shown in Figure 14A.

By so arranging the blades, and it should be borne in mind that the blades are of course disposed around the body as shown in Figures 12 and 13, when the auger is used in a material such as box muck, the progressive inclination of the blades as shown in Figure 14X ensures that the blades 24X(1) to 24X(12), and similarly with the blade series 26X provide an increasing swept volume as the auger is rotated, and this has the effect of accelerating the material towards the centre section XY of the auger body, and enhanced feeding of the material results preventing the disadvantageous barrelling referred to herein.

The auger shown in Figure 12 has a body 10X of constant cross section, but this aspect of the ivention can be used with augers with bodies of cross sections which vary. For example this aspect of the invention can be used in combination with the second aspect of the invention. If such a body were used, then the flights 24X and 26X would require progressively to be of larger amplitude so as to achieve that the tips of the blades travel in the same cylindrical plane, but again in such auger, the blade angles would be progressively greager in the manner illustrated in Figure 14A.

If desired the auger blades 24X and 26X may be provided with reinforcing ribs on the rear sides thereof, if the front sides are taken to be the sides which exercise the pushing effect on the material.

Figure 15 shows an impeller according to a fourth aspect of the present invention. The impeller shaft 46 is shown, and it will be seen that mounted on the impeller are end discs 130, 132, between which are mounted on the shaft 46 at equally spaced locations intermediate discs 134, 136, 138, 140 and 142. The end discs are of the configuration shown in Figure 18, whilst each of the intermediate discs as in the form shown in Figure 17.

Each of the end discs 130, 132, is produced from metal plate, and comprises a four lobed profile arrangement, each lobe such as lobe 144 lying with a leading face 146 substantially on a radius from the centre of a disc, and a curved trailing edge 148 extending from a short outer face 150 to a location near the inner end of the face 146 of the next lobe. The faces 146 and 150 are substantially at right angles, face 146 being substantially radial.

The intermediate discs 134 and 142 are profiled to define eight lobes and each lobe, such as lobe 152 is provided with a leading face 154 which is substantially radial, an outer face 156 which is at right angles to the face 154, and a trailing edge 158 from the trailing end of face 156 to the inner end of the face 154 of the next lobe.

Angle iron bars, such as bars 160 shown in Figure 16 are welded to the lobe faces of the discs and in particular four of the bars 160 are welded to the faces 146 and 150 of the lobes of the end disc 130, and faces 154, 156 of lobes of the adjacent disc 134 which are in alignment with the faces 146 and 150 of the end disc 130.

Four bars 160 are welded to the interspaced lobes on disc 134 on the faces 154 and 156, and to the corresponding faces on aligned lobes on the next adjacent disc 136, and so on until the structure illustrated in Figure 15 results, which is an open cage drum structure with the bars 160 between each pair of adjacent discs being angularly offset relative to the set of bars extending between the next pair of adjacent discs.

The faces of the bars 160 which lie radially with respect to the axis of the shaft 46 are provided with toothed wear plates which in face engage the material in the use of the impeller, and these plates are secured to the faces of the bars 160 by bolts passing through the wear plates and through the holes 162 in the bars 160.

The advantage of this form of impeller is that it is an open cage structure, and therefore the manure can pass between the discs and under the bars, and clearly will be much improved and there will be less probability of the impeller becoming clogged with manure.

Figure 19 shows the transmission which is embodied in the housing 36. The shaft 170 is coupled to the power take-off shaft of the trailer vehicle for example an agricultural tractor, and receives drive therefrom. The shaft 170 carries a first sprocket 172 around which a drive belt 174 is trained. The drive belt 174 drives a large sprocket 176 on a lay shaft 178, said lay shaft having a small sprocket 180 around which a second chain 182 is trained, the chain also being trained round a large sprocket 184 which is fast with the shaft 22 of the auger.

Chain 174 is trained round two idler sprockets 186 and 188 and takes the path illustrated in order to ensure that the shaft 22 will rotate in the opposite direction to the direction in which the drive shaft 170 rotates, because the drive shaft 170 is provided with a second sprocket 190 driving a third chain 192. The chain 192 is trained round a sprocket 194 fast with the impeller shaft 46. Each of the shafts carrying sprockets 188, 194 is carried by position adjustable trunions, whose position can be adjusted by a screw device 196 and 198, in order to tension the respective chains 174 and 192. Instead of the sprocket 194 being fast with the impeller shaft 46, it is possible for sprocket 194 to be on an intermediate shaft which is coupled to the impeller shaft by means of a pair of universal couplings with a shaft section therebetween. This arrangement enables the sprocket 194 to be located closer to the drive shaft 170 than is the shaft of the impeller.

Referring finally to Figs. 20 and 21, an alternative construction for the door and deflector means is shown in that the door 52 has movably mounted thereon a shredder plate 200 having an edge 202 provided with teeth or other serrations for shredding the material which is forced past that edge by the impeller 42. A deflector plate section 204 extends away from the edge 22 and serves to guide the manure which is transported by the impeller 42 so as to control the trajectory of the material as it leaves the impeller. The shreader plate 200 is spring urged towards the impeller 42 by means of a tension spring 206, but its downward movement is limited by means of a positioning device in the form of a cam 208 as shown in Fig. 21. The cam is rotatable and engages the ledge 210 of the shreader plate so that by rotation of the cam 208, the shredder plate will, under the action of the spring 206 move closer to or further away from the impeller 42. The ends of the spring 206 are respectively anchored to the shredder plate at location 210 and to the hopper at location 212. A stop 214 on the door ensures that the shredder plate will be lifted as the door 52 is moved upwards as indicated by arrow 216 so as to fully clear the opening.

In use, the door 52 will be moved to a position only partially clearing the opening and by the adjusting means 208, 210, the shredder plate will be set to a position giving the required clearance K between the impeller and the shredder plate edge 202. This clearance K can be accurately set for giving even distribution of the manure from the impeller without the manure being delivered in large coarse lumps. The shredder plate controls the delivery of the manure so that it is of even consistency, but should a stone, brick or other obstruction arrive at the shredder plate and engage same, then the shredder plate will yield upwardly, either by moving linearly or by pivoting as the case may be, against the action of the spring 206 whereby the obstruction can pass the shredder plate and when the obstruction does pass the shredder plate, it will be returned to the Figure 20 position. It should be pointed out that for the majority of manures, the door 52 need only be opened by a small amount of the order of 50mm, and therefore it will be possible for the shredder plate to be operative for almost the entire range of manures to be spread by the machine. However, when it is desired to move the door 52 to the extremity of its movement in which it clears the opening to the maximum extent for the discharge of heady box muck, the stop 214 will engage a corresponding stop 220 on the shreader plate and the shreader plate and door will then move clear of the opening together.

It can be seen that the invention in all of its aspects provides a number of features improving the operation of the conventional spreading machine of the type set forth. Any one of these aspects can be used alone, or, unless circumstances make it impossible, can be used together.

## Claims

1. A spreading machine of the type set forth wherein the rotary assembly has two opposite handed auger sections extending from the respective ends of the assembly leading to the discharge opening, wherein said discharge opening is of a size permitting effective discharge of the box muck, and is located in relation to the overall size of the hopper such that when the points on the edges of the opening which lie, when viewed horizontally, on the distributor axis are geometrically related to the positions of the top corners of the ends of the hopper such that said top ends lie within angular planes which when the opening is viewed from the side lie at 25° and 75° to the horizontal and pass through said points at the edges of said opening.

2. A spreading machine according to Claim 1, wherein the opening is capable of variation in size by virtue of there being a door which can be positioned completely to uncover the opening or to cover same to a varying degree.

3. The machine according to Claim 2, wherein the door is in two or three sections which cover different parts of the opening and which are individually movable by suitable means such as hydraulic rams.

4. A spreading machine of the type set forth, wherein the rotary assembly comprises an auger shaft carrying flights, wherein the shaft is of reducing diameter from one end towards the other, the flight means preferably being of constant diameter.

5. A spreading machine according to Claim 4, wherein the auger shaft comprises a fabricated shaft of hexagonal cross-section, with the flight means being defined by individual and discrete flight blades mounted on the faces of the auger shaft.

6. A spreading machine according to Claim 4 or 5, wherein the reduction in shaft diameter is achieved by continuously reducing the cross-section from one end to the other.

7. A discharge machine according to Claim 4, 5 or 6, wherein there are two auger sections which respectively feed the manure to a discharge opening in the hopper intermediate the ends thereof.

8. A spreading machine of the type set forth, wherein the rotary assembly is provided with paddles adjacent the opening, said paddles comprising rigid arms extending outwardly from the axis of the rotary assembly and having shoe plates at their outer ends, said shoe plates being inclined relative to the axial planes and the radial planes of the arms so that each shoe plate in the operation of the machine, acts on the material so as to one the one hand move the material towards the opening and on the other hand to move the material axially of the rotary assembly.

9. A spreading machine according to Claim 8, wherein at least two of the arms and the plates are arranged to operate in conjunction with each other so that the displacement of the material by one arm axially of the rotary assembly is towards the radial plane in which the other arm travels and vice versa so that the two arms cooperate to move the material back and forth.

10. A spreading machine of the type set forth, including an impeller comprising an impeller shaft on which are mounted in axially spaced arrangement supporting discs, and extending between the adjacent ones of said discs and manure engaging bar means, the bar means between one pair of adjacent discs being angularly offset in relation to the bar means of the adjacent pair of discs.

11. A spreading machine according to Claim 10, wherein each disc has a profiled periphery to receive by welding the ends of angle iron bars forming part of said bar means, the angle iron bars having mounted thereon removable wear plates having serrated edges for engaging the manure.

12. A spreading machine of a type set forth arranged to operate in an overshot mode, and wherein above the impeller is a deflector means for directing the flight of manure from the impeller, said deflection means comprising a canopy structure which extends outwardly from the side of the hopper and is adjustable in angular position in relation to the hopper.

13. A spreading machine according to Claim 12, wherein the deflector comprises a number of similar canopy sections mounted at their inner ends on a shaft on which they can be turned for adjusting their angular positions, and then be clamped to the shaft.

14. A spreading machine according to Claim 13, wherein the shaft as a whole can be pivoted by means of a hand lever.

15. A spreading machine according to Claim 14, wherein the hand lever has a locking pin which can be engaged in any one of a series of holes in a locking quadrant.

16. A spreading machine according to Claim 15, wherein the shaft and quadrant are secured to a door provided for the closing partially or fully of said opening.

17. A spreading machine of the type set forth, wherein the rotary assembly includes an auger of which the flight means is made up of a number of blades, arranged in a helical path or helical paths to define one or several flight means, the blades being mounted so as to have different inclinations in relation to the axis of the auger and specifically in a direction from end to end of the auger, the blade angles in relation to the auger axis progressively increase or decrease.

18. A spreading machine of the type set forth, including on the inside of the hopper at the rising side of the rotary assembly, retaining means preventing lifting of the box muck up that side of the hopper.

19. A spreading machine according to Claim 18, wherein the retaining means comprise tines are disposed horizontally or above or below the horizontal.

20. A spreading machcine of the type set forth including a door for closing the opening, said door being positionable to close the opening to a greater or lesser extent, and in addition there is a shredder plate mounted on but movable relative to the door, said shredder plate having a shredding edge which overhangs an edge of the door which overlaps the opening of the impeller, said shredder plate being adjustable on the door so as to vary accurately the spacing between the impeller and the shredder plate edge so as to control the degree of shredding of the material which issues from the impeller.

21. A spreading machine according to Claim 20 wherein the shredder plate is displaceable away from the impeller against spring loading when a stone or other obstruction strikes same.

22. A spreading machine according to any one of the preceding Claims in combination with any one or more of the other preceding Claims and/or in combination with any features of spreading machines as disclosed and/or illustrated herein.

23. A spreading machine of the type set forth substantially as hereinbefore described with reference to the accompanying drawings.

*FIG.1*

*FIG.2*

FIG. 3

FIG. 4

FIG. 5

FIG. 6

FIG.7

_FIG.8_

_FIG.9_

_FIG.10_

_FIG.11_

FIG. 12

FIG. 13

FIG. 14

0 237 645

24X

26X

24X(1)  24X(3)

24X(2)

24X(11)

24X(12)

_FIG.14A_

162

130

46

134

136

138

140

142

132

_FIG.15_

0 237 645

_FIG.16_

160

160

_FIG.17_

154

152

156

134-142

158

154

FIG.18

FIG.20

FIG.21

FIG. 19

0 237 645